# EUROPÄISCHE PATENTANMELDUNG

(11) **EP 0 716 903 A1**
(43) Veröffentlichungstag der Anmeldung: **19.06.1996**
(21) Anmeldenummer: 95119096.6
(22) Anmeldetag: 05.12.1995
(51) Int. Cl.: B24D 11/02

(54) **Schleifmittel auf Unterlage**

(30) Priorität: 07.12.1994 DE 9419573 U
(71) Anmelder: Jöst, Peter, D-69483 Wald-Michelbach (DE)
(72) Erfinder: Jöst, Peter, D-69483 Wald-Michelbach (DE)
(74) Vertreter: Ratzel, Gerhard, Dr.

(57) **Zusammenfassung**

Die vorliegende Erfindung betrifft ein Schleifmittel auf Unterlage, aufgebaut aus einem Grundmittel, Schleifkorn und Deckbindemittel auf flexiblem Trägermaterial, wobei die Unterlage aus einem Faservlies besteht, das mechanisch, aerodynamisch, hydrodynamisch oder nach dem Spinnvliesverfahren hergestellt ist und mit Hilfe eines Bindemittels oder durch Anlösen und Verschweißen der Fasern zu einem flachen, ebenen abrieb- und reißfestem Trägermaterial verfestigt ist und auf mindestens einer Seite mit einem Schleifkorn beschichtet ist.

## Beschreibung

Die Erfindung betrifft ein Schleifmittel, ausgehend vom Oberbegriff des Hauptanspruchs.

Bei Schleifmitteln auf Unterlage werden in der Regel als Trägermaterial Papiere, appretierte Gewebe oder Kombinationen aus diesen beiden Produkten eingesetzt. Je nach Anwendung der Schleifmittel müssen diese den Anforderungen durch zusätzliche Behandlungsverfahren angepaßt werden, wie z.B. die Naßschleifpapiere oder die Schleifgewebe, die zusätzlich geflext werden, um eine optimale Anpassung des Schleifkörpers bzw. des Schleifmittels an das Werkstück zu bekommen.

Der vorliegenden Erfindung liegt die Aufgabe zugrunde, ein Schleifmittel zu entwickeln, das folgende Eigenschaften aufweist und sich gegenüber den oben beschriebenen und hinlänglich bekannten Trägermaterialien für Schleifmittel wie folgt unterscheidet:
Es soll ein Trägermaterial verwendet werden, daß dazu führt, daß das Schleifmittel bzw. der Schleifkörper besser auf die Anforderungen des Marktes abgestimmt werden kann.
Das verwendete Trägermaterial soll dazu führen, daß das Schleifmittel bzw. der Schleifkörper beidseitig mit Korund beschichtet werden kann und trotzdem eine flexible Anpassungsfähigkeit besitzt.

Eine weitere Aufgabe der vorliegenden Erfindung besteht darin, ein Schleifmittel bzw. einen Schleifkörper zu schaffen, das/der ohne besondere Behandlung des Trägermaterials im Naß- und Trockenschliff eingesetzt werden kann.
Ferner soll ein Trägermaterial verwendet werden, das im Gegensatz zu 200 g/qm Trägerpapieren auch bei diesem qm-Gewicht noch wesentlich flexibler als diese ist. Ferner soll ein Trägermaterial verwendet werden, das bei einem geringen Flächengewicht hohe Reiß- und Weiterreißfestigkeiten aufweist, was bedeutet, daß man auch bei einem groben Korn noch relativ leichte, dünne und flexible Trägermaterialien verwenden kann. Ferner soll erreicht werden, daß kein Zusetzen des Schleifmittels durch Schleifstaub erfolgen kann. Eine weitere Aufgabe der vorliegenden Erfindung besteht darin, einen Schleifkörper zu schaffen, bei dem ohne zusätzliche Anordnung eines Veloursgewebe das eigentliche Trägermaterial aufgerauht werden kann, um eine Kletthaftung bzw. eine Klettverbindung zu schaffen. Eine Luftdurchlässigkeit des Trägermaterials und somit die Eignung für den Einsatz von Schleifmaschinen mit Absaugeinrichtungen ohne zusätzliche Lochung im Schleifkörper soll mit der vorliegenden Erfindung ebenfalls erreicht werden. Diese Aufgaben werden erfindungsgemäß durch einen Schleifkörper nach dem Kennzeichen des vorgeschlagenen Anspruchs 1 gelöst. Besonders bevorzugte Weiterbildungen der Erfindung sind in den Unteransprüchen gekennzeichnet.

Durch den Einsatz eines Faservlieses als Trägermaterial können oben genannte Aufgaben und technische Probleme gelöst werden. Beim Einsatz eines Schleifmittels auf Unterlage mit einem Faservlies als Trägermaterial können diese besser auf die Anforderungen des Marktes abgestimmt werden. Faservlies-Schleifmittel können beidseitig mit Korund beschichtet werden und bleiben trotzdem flexibel und anpassungsfähig. Faservlies-Schleifmittel können ohne besondere Behandlung des Trägermaterials im Naß- und Trockenschliff eingesetzt werden. Faservlies-Trägermaterialien sind im Gegensatz zu 200 g/qm Trägerpapieren auch bei diesem qm-Gewicht noch wesentlich flexibler. Faservlies - Trägermaterialien auf Spinnvliesbasis haben schon bei einem geringen Flächengewicht hohe Reiß und Weiterreißfestigkeiten, was bedeutet, daß man auch bei einem groben Korn noch relativ leichte, dünne und flexible Trägermaterialien verwenden kann. Faservlies-Trägermaterialien sind flexibel, was den Vorteil hat, daß sich das Schleifmittel nicht so schnell zusetzt, weil sich der Schleifstaub nicht zwischen dem Schleifkorn festsetzen kann, da das Korn, anders als beim Schleifpapier oder Schleifgewebe, aufgrund der Flexibilität und geringeren Dehnfestigkeit des Vliesträgers und der elastischen Kornbindung, nicht so starr verankert ist.
Faservlies-Schleifmittel können einseitig angerauht werden und brauchen somit nicht zusätzlich mit Velours zwecks Kletthaftung beschichtet werden. Faservlies-Trägermaterialien können so konstruiert werden, daß sie luftdurchlässig und somit besonders für Schleifmaschinen mit Absaugeeinrichtung geeignet sind, ohne zusätzlich mit einer Lochung für die Absaugung versehen werden zu müssen.

Ein Großteil der oben beschriebenen Vorteile und Eigenschaften der Faservliesschleifmittel können bei der Herstellung der Schleifmittel mit einem Papier oder Gewebe als Trägermaterial teilweise überhaupt nicht oder nur zu Lasten höherer Herstellungskosten und daraus resultierend zu höheren Verkaufspreisen realisiert werden.

Erfindungsgemäß wird nun die Unterlage aus einem Faservlies geschaffen, das mechanisch, aerodynamisch, hydrodynamisch oder nach dem Spinnvliesverfahren hergestellt ist und mit Hilfe eines Bindemittels oder durch Anlösen und Verschweißen der Fasern zu einem flachen, ebenen abrieb- und reißfestem Trägermaterial verfestigt ist und auf mindestens einer Seite mit einem Schleifkorn beschichtet ist.
Das Faservlies kann erfindungsgemäß beidseitig mit einem Schleifkorn beschichtet werden. Ein weiteres besonderes Merkmal der vorliegenden Erfindung besteht darin, daß das Faservlies einseitig mit einem Verstärkungsgewebe beschichtet oder verbunden ist. Eine solche Ausführungsform eignet sich in hervorragender Weise zur Schaffung von zugbelasteten Schleifbändern. Ein weiteres Merkmal der Erfindung besteht darin, daß entweder das Faservlies zum Zwecke der Bildung eines Klettverschlusses einseitig mit einem Veloursgewebe beschichtet ist oder daß das Faservlies einseitig aufgerauht ist und somit eine Klettadaptionsfläche aufweist. Besonders bevorzugt werden erfindungsgemäß Faservliese mit einem Flächengewicht von 10 - 200 g/qm. Das Faservlies soll in etwa eine Dicke von 0,5 - 5 mm aufweisen. Der Schleifkörper als solches kann als Scheibe, vieleckiges Blatt, Band oder Schleifbürste ausgeführt werden.

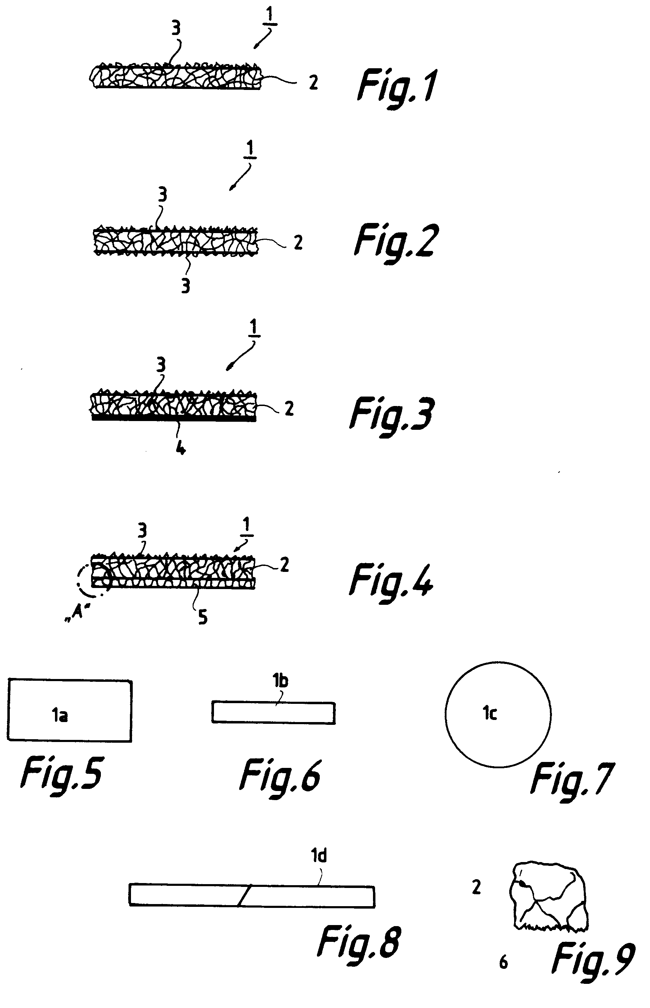

Anhand den beigefügten Zeichnungen, die besonders bevorzugte Ausführungsbeispiele der Erfindung zeigen, wird diese nun näher beschrieben.
Dabei zeigen:
- Figur 1: eine schematische Darstellung des erfindungsgemäßen Schleifkörpers mit einer Kornschicht;
- Figur 2: eine schematische Darstellung der vorliegenden Erfindung, bei der der Schleifkörper auf beiden Seiten mit Schleifkorn beschichtet ist;
- Figur 3: den erfindungsgemäßen Schleifkörper in einer schematischen Darstellung, wobei auf einer Seite eine Schleifkornbeschichtung und auf der anderen Seite ein Verstärkungsgewebe angeordnet ist;
- Figur 4: eine Ausführungsform der vorliegenden Erfindung in schematischer Darstellung, wobei eine Schleifschicht und eine Klettschicht aus Velours vorgesehen ist;
- Figur 5: einen Schleifbogen;
- Figur 6: einen Schleifstreifen;
- Figur 7: eine Schleifscheibe;
- Figur 8: ein Schleifband.
- Figur 9: eine Vergrößerung des in Figur 4 mit "A" gekennzeichneten Details
Mit dem Bezugszeichen 1 ist in allen Figuren der Schleifkörper als solcher gekennzeichnet. In Figur 1 besteht der Schleifkörper 1 aus einem Faservlies 2 und einem Schleifmittel bzw. dem Schleifkorn 3, das als eigenständige Schicht auf der Unterlage aus Faservlies 2 aufgetragen und befestigt ist. Das Wesen des Schleifkörpers 1 nach Figur 1 besteht darin, daß die Unterlage, also das Faservlies 2, auf nur einer Seite mit dem Schleifkorn 3 beschichtet ist.

Die Figur 2 zeigt eine erste Variante der Erfindung, wobei das Schleifmittel bzw. das Schleifkorn 3 auf beiden Seiten des Faservlieses 2 aufgebracht ist.

Die Figur 3 zeigt eine weitere Variante der vorliegenden Erfindung. Hier ist auf einer Seite das Schleifmittel bzw. das Schleifkorn 3 aufgetragen, während auf der gegenüberliegenden Seite der Faservliesunterlage 2 ein Verstärkungsgewebe 4 vorgesehen ist. Diese Ausführungsform eignet sich in hervorragender Weise für Schleifbänder. Unter Verstärkungsgewebe wird hier jede Maßnahme verstanden, die die Rißfestigkeit des Schleifkörpers erhöht.

Figur 4 zeigt eine Ausführungsvariante der vorliegenden Erfindung, bei der auf einer Seite das Schleifmittel bzw. das Korn 3 aufgetragen ist, während auf der Rückseite der Faservliesunterlage 2 ein Veloursgewebe 5 angeordnet ist. Diese Ausführungsform eignet sich in hervorragender Weise zur Adaption mit weiteren Werkzeugen durch die an sich bekannte Klettverbindung.

Figur 5 zeigt einen Schleifbogen 1a, Figur 6 einen Schleifstreifen 1b und Figur 7 eine Schleifscheibe 1c.

Figur 8 zeigt ein Schleifband 1d.
Die beanspruchte Ausführungsform als Schleifbürste sowie die Vielzahl von weiteren Variationsmöglichkeiten wurde hier nicht dargestellt.

Die Figur 9 zeigt das in Figur 4 mit "A" gekennzeichnete Detail in einer Vergrößerung. Hier ist zu erkennen, daß die Rückseite des Faservlieses 2 aufgerauht ist und durch diese Aufrauhung eine Klettadaptionsfläche 6 gebildet wird.

Mit der vorliegenden Erfindung wird ein Schleifmittel mit einem Faservlies als Unterlage geschaffen, der die Eigenschaften der an sich bekannten Schleifkörper aus dem Stand der Technik in sprunghafter Weise verbessert.

### Bezugszeichenliste

- 1: Schleifkörper
- 2: Faservlies
- 3: Schleifkorn
- 4: Verstärkungsgewebe
- 5: Veloursgewebe
- 6: Klettadaptionsfläche

## Patentansprüche

1. Schleifmittel auf Unterlage, aufgebaut aus einem Grundbindemittel, Schleifkorn und Deckbindemittel auf flexiblem Trägermaterial,
dadurch gekennzeichnet,
daß die Unterlage aus einem Faservlies (2) besteht, das mechanisch, aerodynamisch, hydrodynamisch oder nach dem Spinnvliesverfahren hergestellt ist und mit Hilfe eines Bindemittels oder durch Anlösen und Verschweißen der Fasern zu einem flachen, ebenen abrieb- und reißfestem Trägermaterial verfestigt ist und auf mindestens einer Seite mit einem Schleifkorn (3) beschichtet ist.

2. Schleifmittel nach Anspruch 1,
dadurch gekennzeichnet,
daß das Faservlies (2) beidseitig mit einem Schleifkorn (3) beschichtet ist.

3. Schleifmittel nach Anspruch 1,
dadurch gekennzeichnet,
daß das Faservlies (2) einseitig mit einem Verstärkungsgewebe (4) beschichtet oder verbunden ist.

4. Schleifmittel nach Anspruch 1,
dadurch gekennzeichnet,
daß das Faservlies (2) zum Zwecke der Bildung eines Klettverschlusses einseitig mit einem Veloursgewebe (5) beschichtet ist.

5. Schleifmittel nach Anspruch 1,
dadurch gekennzeichnet,
daß das Faservlies (2) einseitig aufgerauht ist und somit eine Klettadaptionsfläche (6) aufweist.

6. Schleifmittel nach Anspruch 1 bis 5,
dadurch gekennzeichnet,
daß das Faservlies (2) ein Flächengewicht von 10 - 200 g/qm aufweist.

7. Schleifmittel nach Anspruch 1 bis 6,
dadurch gekennzeichnet, daß das Faservlies (2) eine Dicke von 0,5 - 5 mm aufweist.

8. Schleifmittel nach Anspruch 7,
dadurch gekennzeichnet,
daß der Schleifkörper als Scheibe, vieleckiges Blatt, Band oder Schleifbürste ausgeführt ist.
